## Europäisches Patentamt

## European Patent Office

## Office européen des brevets

(11) Publication number: **0 004 045**
**B2**

(12) **NEW EUROPEAN PATENT SPECIFICATION**

(45) Date of publication of the new patent
specification: **31.07.85**

(51) Int. Cl.⁴: **F 16 H 47/06**

(21) Application number: **79100629.9**

(22) Date of filing: **03.03.79**

(54) **Power shift transmission.**

(30) Priority: **06.03.78 US 884078**

(43) Date of publication of application:
**19.09.79 Bulletin 79/19**

(45) Publication of the grant of the patent:
**31.07.85 Bulletin 85/31**

(45) Mention of the opposition decision:
**14.04.82 Bulletin 82/15**

(84) Designated Contracting States:
**DE FR GB IT NL SE**

(56) References cited:
**DE-A-2 215 396**
**DE-A-2 452 739**
**DE-B-1 550 773**
**DE-C- 883 691**
**DE-C- 926 468**
**DE-C- 935 047**
**DE-C- 972 489**
**DE-C-1 200 630**

(73) Proprietor: **EATON CORPORATION**
**100 Erieview Plaza**
**Cleveland Ohio 44114 (US)**

(72) Inventor: **Morscheck, Timothy John**
**18221 Rainbow Dr.**
**Lathrup Village Michigan (US)**

(74) Representative: **Rüger, Rudolf, Dr.-Ing. et al**
**Patentanwälte Dr.-Ing. R. Rüger Dipl.-Ing. H.P.**
**Barthelt Webergasse 3 Postfach 348**
**D-7300 Esslingen/Neckar (DE)**

(56) References cited:
**FR-A-2 199 384**
**US-A-3 426 622**

**J. LOOMAN "Zahnradgetriebe", Springer**
**Verlag Berlin 1970, p. 102, 167 and 175**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to transmissions adapted for power shifting and in particular for use in land vehicles.

It is known in the transmission art to first synchronize and clutch an intermediate shaft or ratio gear with the transmission output and to then clutch the intermediate shaft or ratio gear to the transmission input. Such synchronizing, which may be referred to as output synchronizing, is also known in prior art transmissions having plural countershafts. Many prior art transmissions, which employ plural countershafts and output synchronizing, power shift from one countershaft to another to upshift or downshift the transmission and synchronize a non-driving countershaft with the transmission output in preparation for the next shift.

A power shift transmission of this type is known, e.g. from DE—C 935 047. This transmission is provided with two multiple ratio power paths, which are alternately power shifted between a main drive input and an output shaft via two medial input shafts. Each of the power paths includes synchronizing means and means operative subsequent to the synchronizing for positively clutching the synchronized elements. Furthermore, friction clutch means in the form of a double-acting friction clutch are provided, which are disposed between the constantly driven drive means and the two drive shafts so that alternately one of the drive shafts is connected to the drive means. Before power shifting between one and the other power path, the countershaft of the other power path is synchronized and subsequently positively clutched with the output shaft, while the input shaft belonging to this other power path is disconnected from the continuously driven drive means by the respective friction clutch.

When the above prior art transmissions are used in combination with a torque converter, the sole source of power input to the transmission is through the torque converter which is rather inefficient and not needed in the higher speed ratios of the transmission. To negate this inefficiency, torque, converter bypass or lock-out clutches have been used.

Such clutches have the disadvantage in that they and their needed control systems may increase the cost and complexity of the transmissions.

Something similar is true for a power shift transmission in accordance with the preamble of claim 1 and disclosed in DE—A1—24 52 739. This transmission is also provided with two multiple ratio power paths which are alternately power-shifted between a main drive input shaft and an output shaft; each of these two power paths includes intermediate shaft means comprising clutch means for positively clutching the intermediate shaft means with the continuously driven input shaft, while the intermediate shaft means is drivingly disconnected from the output shaft. To this end, friction clutch means are drivingly interposed between the intermediate shaft means and the output shaft and operative after said positive clutching to power-clutch the intermediate shaft means with the output shaft. The friction clutch means and the intermediate shaft means include a system of 4 freewheel assemblies which makes sure that the two intermediate shaft means are always drivingly connected with the input shaft. This is true even for the case that the transmission is shifted into neutral and that the engine driving the input shaft is idliing. The fact that all intermediate shaft means — including the non-operative intermediate shaft means — are always kept rotating, adversely effects the overall transmission efficiency. Apart from that, the use of free-wheel assemblies has a tendency of additionally increasing the cost and complexity of the transmission.

It is therefore an object of the invention to provide a transmission suited for use in combination with a torque converter and which is low in initial cost and economical in use, while it is readily shifted without a break in power between the transmission input and output. This object is attained by the invention as it is characterized in the claims.

It is an advantage of the invention that the input shaft means are continuously driven by the drive source and that there is no clutch interposed between the drive source and the input shaft means. This becomes very significant when one wishes to provide a transmission embodying the starting and shifting advantages inherent in a torque converter, while at the same time avoiding the inherent inefficiencies of the torque converter in high-speed ratio gears.

The preferred embodiment of the invention is shown in the accompanying drawings in which:

FIGURE 1 is a schematic view of the transmission, looking in the direction of arrows 1—1 of FIGURE 2;

FIGURE 2 is a schematic view of the transmission, looking in the direction of arrows 2—2 of FIGURE 1;

FIGURE 3 is a detailed view of the transmission of FIGURE 1, looking in the direction of arrows 1—1 of FIGURE 2;

FIGURE 4 is a detailed view of a portion of the transmission, looking in the direction of arrows 3—3 of Figure 2; and

FIGURE 5 is a schematic view of a portion of a countershaft assembly of FIGURES 1 and 3.

Certain terminology referring to direction and motion will be used in the following description. The terminology is for convenience in describing the preferred embodiment and should not be considered limiting unless explicitly used in the claims.

Detailed Description of the Preferred
Embodiment

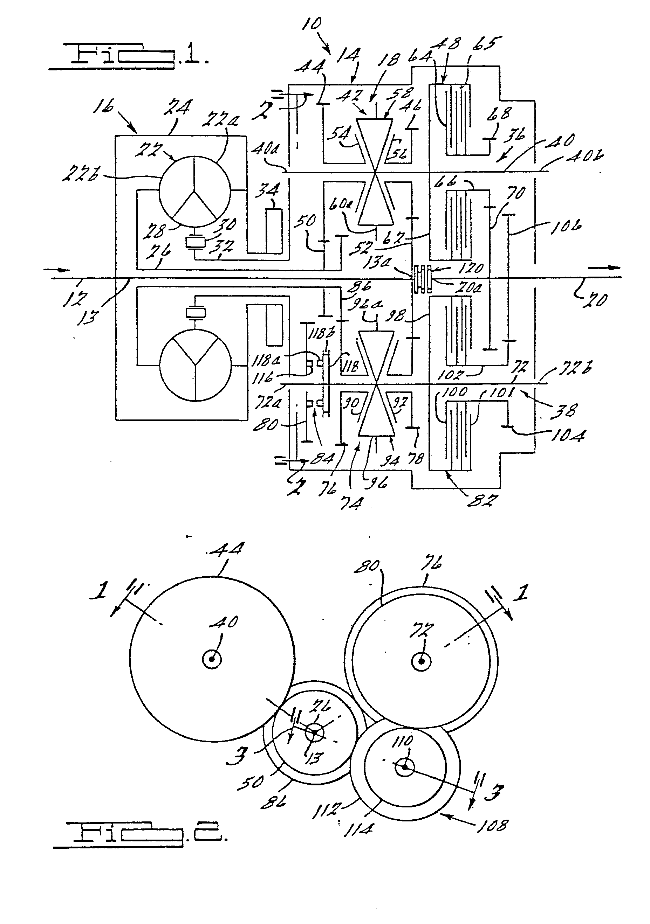

Looking first at FIGURE 1, therein is schematically illustrated a power shift transmission assembly 10 adapted for use in an unshown land vehicle, but not limited to such use. Transmission 10 is preferably automatically shifted by an unshown control system, which control system forms no part of the instant invention. Transmission 10 includes an input shaft 12 whic may be directly driven by an unshown internal combustion engine, a housing assembly 14, a torque converter assembly 16, a ratio change gear assembly 18 which is driven by input shaft 12 through torque converter assembly 16 in first, second, and reverse ratios and is driven directly by a bypass input shaft 13 in third and fourth ratios, and an output shaft 20 axially aligned with input shafts 12 and 13.

The torque converter assembly 16 is conventional in that it includes a fluid coupling of the torque converter type having an impeller 22a driven by input shaft 12 through a shroud 24, a turbine 22b hydraulically driven by the impeller and in turn driving a sleeve shaft 26 which extends into gear assembly 18, and a runner or stator 28 which becomes grounded to housing 14 via a one-way roller clutch 30 carried by a sleeve shaft 32 fixed to housing assembly 14. Shroud 24 also drives a pump 34 for pressurizing the torque converter, for lubricating the transmission and for selectively pressurizing friction clutches in gear assembly 18.

Sleeve 26 provides a fluid power or torque converter driven shaft for first, second, and reverse ratio gears in gear assembly 18. Bypass shaft 13 is in continuous direct drive with input shaft 12 and provides a torque converter bypass for driving third and fourth ratio gears; this arrangement of the bypass shaft negates the need of a separate torque converter bypass clutch.

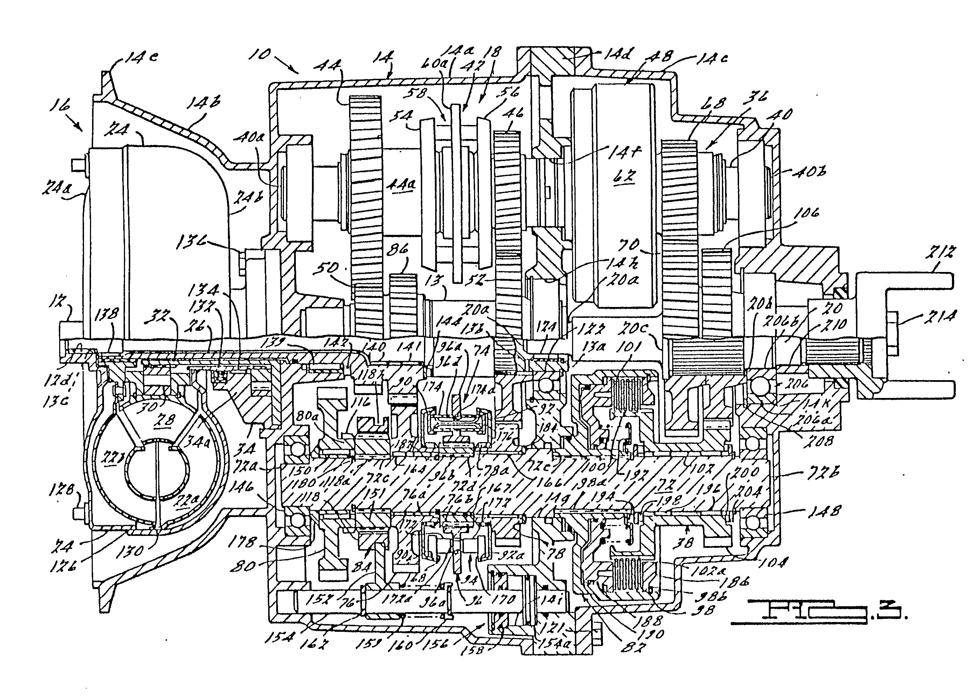

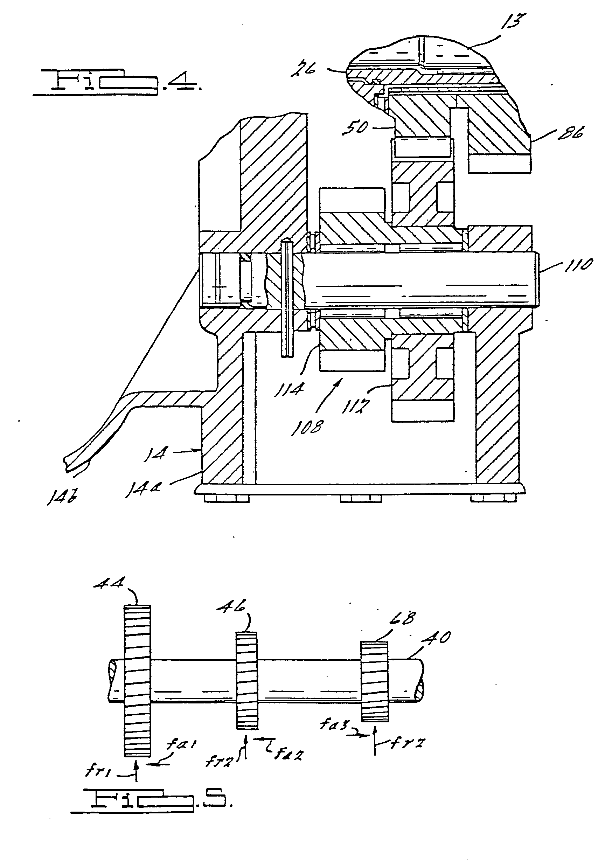

Looking now at FIGURES 1 and 2, the schematically illustrated ratio change gear assembly includes two countershaft assemblies 36 and 38, which are disposed about axes which are parallel to and radically outward of an axis defined by shafts 12, 13, and 20. Assembly 36 includes a shaft 40 rotatably supported at its ends 40a and 40b by housing assembly 14, a double acting synchronizer clutch 42, first and third speed ratio gears 44 and 46 rotatable relative to and supported by shaft 40, and a hydraulically actuated friction clutch 48. First speed ratio gear 44 is driven by and in continuous mesh with an input drive gear 50 which is non-rotatably secured to bypass shaft 13. Synchronizer clutch 42 may be a conventional double acting synchronizer having a clutch member 54 at one end which is non-rotatably secured to gear 44, a clutch member 56 at the other end which is non-rotatably secured to gear 46, and a center clutch member 58 at the center which is non-rotatably secured to shaft 40. Center clutch member 58 may be slidably shifted leftwardly or rightwardly in a conventional manner to, respectively couple gear 44 or 46 to shaft 40. Such slidable shifting of the center clutch member first frictionally couples countershaft 40 with one of the ratio gears and after synchronism is reached, then positively clutches the shaft with the gear via a jaw clutch shown in FIGURE 3.

Center clutch member 58 includes a radically extending flange portion 60a which may be gripped by an unshown shift fork to effect the leftward and rightward shifting in a conventional manner. Friction clutch 48 includes a housing member 62 non-rotatably secured to shaft 40, two sets of interdigitated disks 64 and 65, and a sleeve shaft 66 rotatably supported by shaft 40. Disks 64 are non-rotatably secured to sleeve shaft 66 and disks 65 are non-rotatably secured to housing member 62. Both disk sets are axially moveable in housing 62 and are frictionally interconnected in response to hydraulic pressure being selectively applied to an unshown piston in the housing member 62. Sleeve shaft 66 is nonrotatably secured to a drive gear 68 which is rotatably supported by shaft 40. Drive gear 68 is in continuous mesh with an output gear 70 which is non-rotatably secured to output shaft 20.

Countershaft assembly 38 differs from assembly 36 mainly in that it also includes a reverse ratio gear. Assembly 38 includes a shaft 72 rotatably supported at its ends 72a and 72b by housing assembly 14, a double acting synchronizer clutch 74, second, fourth and reverse speed ratio gears 76, 78, 80 which are rotatably relative to and supported by shaft 72, a hydraulically actuated friction clutch 82, and a positive type jaw clutch assembly 84. Clutch 84 may be a synchronized clutch similar to clutches 42 and 74. Second speed ratio gear 76 is driven by and in continuous mesh with an input drive gear 86 which is non-rotatably secured to torque converter driven shaft 26. Fourth speed ratio gear 78 is driven by and in continuous mesh with input drive gear 52 which is non-rotatably secured to bypass shaft 13. Synchronizer clutch 74 is a double acting clutch and may be identical to synchronizer 42. Synchronizer clutch 74 includes a clutch member 90 at one end which is non-rotatably secured to gear 76, a clutch member 92 at the other end which is non-rotatably secured to gear 78, and a center clutch member 94 at the center which is non-rotatably secured to shaft 72. Center clutch member 94 includes a radially extending flange portion 96a which may be gripped by an unknown shift fork to effect leftward and rightward shifts in the same manner as described for synchronizer 42. Friction clutch 82 may be identical to friction clutch 48. Friction clutch 82 includes a housing member 98 which is non-rotatably secured to shaft 72, two sets of disks 100 and 101, and a sleeve shaft 102 rotatably supported by shaft 72. Disks 100 are non-rotatably secured to sleeve shaft 102 and disks 101 are non-rotatably secured to housing member 98. Both disk sets are axially moveable in housing 98 and are frictionally interconnected in response to hydraulic pressure being selectively applied to an unshown piston in housing member 98. Sleeve shaft 102 is non-rotatably secured to a drive gear 104 which is rotatably supported by shaft 72. Driven gear 104 is in continuous mesh with an output gear 106 which is non-rotatably secured to output shaft 20.

Reverse gear 80 is rotatably supported by shaft 72 and is driven by an idler gear assembly 108, seen only in FIGURES 2 and 4. Idler gear assembly 108 includes a shaft 110 which is non-rotatably suppoted by housing assembly 14, a gear 112 which is rotatably supported on shaft 110 and in continuous mesh with input drive gear 50 which is driven by torque converter driven shaft 26, and a gear 114 which is rotatably supported on shat 110 and non-rotatably secured to gear 112. Gear 114 is in continuous mesh with reverse gear 80. Jaw clutch assembly 84 includes a jaw clutch teeth 116 which are non-rotatably secured to gear 80 and a jaw clutch member 118 mounted for sliding movement relative to shaft 72 and secured against rotation relative to shaft 72. Member 118 includes a jaw clutch teeth 118a which engage with teeth 116 and an annular groove 118b which receives a shift fork 152 engaging the clutch in a conventional manner. Shift fork 152 is shown in FIGURE 3.

By way of example, the ratios of ratio change gear assembly 18 are: first gear — 4.05, second gear — 2.22, third gear — 1.42, fourth gear — 1.00, and reverse gear — 4.76. As may be seen, bypass shift 13 and output 20 rotate at the same speeds when drive is through fourth gear.

Gear assembly 18 may also be provided with a direct drive clutch 120 at the confronting ends 13a and 20a and the bypass of output shafts 13 and 20 for bypassing fourth speed ratio drive through countershaft 38. Such a clutch may be a non-synchronized positive type jaw clutch as illustrated herein, since herein shafts 13 and 20 rotate at the same speeds in the fourth speed drive ratio. Further, the direct drive of clutch 120 could be used to provide a fifth speed ratio by decreasing the ratio spacing of first, second, third, and fourth ratio gears so that output shaft 20 would rotate slower than bypass shaft 13 when driving in fourth speed. When using clutch 120 to provide a fifth speed ratio, the clutch is preferably a fluid actuated friction clutch or a synchronized jaw clutch, both of which may be of a conventional type.

Looking now at FIGURES 3 and 4, therein the transmission of FIGURES 1 and 2 is disclosed in greater detail to show additional features not readily shown in a schematic. The transmission of FIGURES 3 and 4 does not include the direct drive clutch 120 but is otherwise the same as that previously described. Thus, in FIGURES 3 and 4 the numerals corresponding to those of FIGURES 1 and 2 will refer to parts already described.

In FIGURE 3, housing assembly 14 includes a front housing member 14a having a bell housing portion 14b formed integral therewith, a rear housing member 14c, and an intermediate plate member 14d. Members 14a, 14c, and 14d are secured together via plurality of bolts 121, one of which is shown. A flange portion 14e of the bell housing provides means for securing the transmission to the rear of an engine housing. Intermediate plate 14d includes through bores 14f and 14g for the passage of shafts 40 and 72, a bore 14h having a bearing 122 disposed therein for rotatably supporting end 13a of shaft 13. End 20a of shaft 20 extends into a blind bore 13b in shaft 13 and is supported therein by a roller bearing 124. Intermediate plate 14d also includes several unshown oil passages for directing lubricating oil to various portions of the transmission and for directing oil to actuate clutches 48 and 82.

Shroud 24 of torque converter assembly 16 includes a front portion 24a and a rear portion 24b which are non-rotatably secured together at 126. Front portion 24a is integrally formed with a cup shaped portion defining shaft 12 and having internal splines 12a which receive splines 13c for driving shaft 13. Front portion 24a also includes a plurality of studs 128 for securing the transmission input to an unshown crankshaft or output shaft of an engine or motor. The rear portion 24b is fixed to impeller 22a at 130 and is welded to a sleeve 132. Sleeve 132 rotatably supports the rear portion 24a via a bearing 134 and drives pump 34. Pump 34 may be a well known crescent gear pump. Bearing 134 is supported by pump housing 34a which is bolted to housing portion 14a via a plurality of bolts 136. Shafts 13 and 26 are rotatably supported relative to each other and housing assembly 14 via roller bearings 138, 139, 140, 141, and, as previously mentioned, by bearing 122. Shafts 13 and 26 are axially retained relative to housing assembly 14 and each other by a ball bearing 122 and roller bearings 142 and 144.

Looking now at cross-sectioned countershaft 38, ends 72a and 72b of shaft 72 are supported by ball bearings 146 and 148 which also axially retain the shaft. Reverse gear 80 is rotatably supported on shaft 72 by a roller bearing 150 and includes an axially extending portion 80a having external splines defining jaw clutch teeth 116 of the jaw clutch assembly 84. Clutch assembly 84 further includes a ring member 151 splined on its I.D. to shaft 72 and splined on its O.D. to jaw clutch teeth 118a of member 118. Annular groove 118b in member 118 receives a shift fork 152 which is slidably connected to a shift rod 154 of an actuator 156. Actuator 156 includes a piston portion 154a formed on or fixed to rod 154 and disposed in a cylinder 14i cast into intermediate plate 14d, and an end plate 158 for closing the cylinder. A spring 159 disposed between a snap ring assembly 160 and shift fork 152 resiliently urges clutch teeth 118a into engagement with clutch teeth 116 in response to leftward movement of rod 154 and piston 154a. A snap ring 162 contacts the shift fork for disengaging the jaw clutch in response to rightward movement of the rod and piston. Cylinder 14i is provided with oil on both sides of piston 154a by unshown passages in intermediate plate 14d. Hydraulic sealing of the piston and cylinder is provided by O-ring seals in a conventional manner. Hydraulic actuators for shifting synchronizers 42 and 74 are provided in a similar manner.

Gear 76 includes an axially extending sleeve portion 76a having external jaw clutch splines 76b which receive internal splines of clutch member 90. Gear 76 and sleeve portion 76a are rotatably supported on shaft 72 by a pair of roller bearings 164. In a like manner, gear 44 of countershaft assembly 36 includes an axially extending portion 44a, but of longer length, splined to clutch member 54 and unshown roller bearings for rotatably supporting the gear and sleeve portion on shaft 40. In a similar manner, gear 78 is rotatably supported on shaft 72 by a roller bearing 166 and includes an axially extending portion having external jaw clutch splines 78a which receive internal splines of clutch member 92. Gear 46 is rotatably mounted on shaft 40 and connected to clutch member 56 in the same manner.

Double acting synchronizer 74, of which members 90 and 92 are part, is well known in the prior art. The synchronizer and in particular center clutch 94 inicludes a sleeve 167 splined on its inner diameter to shaft 72 and on its outer diameter to internal jaw clutch splines 96b of a slidable positive type jaw clutch member 96 integrally formed with flange portion 96a, a pair of friction cone rings 168 and 170 rigidly secured together by three circumferentially positioned pins 172, and a pair of internal friction cone surfaces 90a and 92a which are engageable with external cone surfaces defined by rings 168 and 170. Pins 172, which extend through three chamfered openings 96c circumferentially positioned in flange 96a, have at their centers (the position of the flange in its neutral position) an annular groove 172a having chamfered ends. The inner diameter of each chamfered opening 96c is slightly greater than the major outer diameter of each 172. Annular grooves 172a are slightly wider than the flange. Center clutch member 94 further includes three axially split pins 174 extending through three chamfered openings 96d which are alternately spaced between openings 96c. Pins 174 each consist of a pair of semicylindrical halves which are biased apart by a leaf spring 176. Each pair of semicylindrical halves define an annular groove 174a having chamfered ends. Annular groove 174a is formed by a semiannular groove defined by each pin half. Spring 176 biases the semiannular grooves outward into engagement with openings 96d. The inner diameter of openings 96d is slightly greater than the major outer diameter of pins 174. Annular grooves 174a closely fit the width of flange 96a.

The center clutch member 94 is shown in the neutral position, therefor both gears 76 and 88 are disengaged, the friction cone surfaces are slightly spaced apart, pins 172 and 174 and their respective grooves are concentric with openings 96c and 96d, and the semiannular grooves defining grooves 174a are biased into engagement with holes 96d. When it is desired to couple gear 76 to shaft 72, flange portion 96a is moved axially to the left by an appropriate shift mechanism. Such movement, which is transmitted through split pins 174, shifts the cone surface ring 168 into contact with cone surface 90a. This contact (provided gear 76 and flange 96a are not synchronous with each other) causes pins 172 to move out of concentric alignment with openings 96c, whereby the chamfers of the openings 96c and the chamfers of the grooves 172a engage and prevent further axial movement of the flange due to torque at the interface of the chamfers. As synchronous speeds are reached, the torque at the interface of the chamfers diminishes and the axial force on flange 96a moves pins 172 back into a concentric relationship with openings 96c, thereby allowing flange 96a and jaw member 96 to move axially to the left for engaging jaw clutch splines 96b with jaw clutch spines 76b. Gear 78 is coupled to shaft 72 in the same manner by moving the flange rightward.

The transmission gears are preferably helical gears and as such they are axially loaded with substantial forces when they are transmitting torque. Further, since the gears are in continuous mesh, they rotate at different speeds. Hence, it is preferred that the gears be axially isolated from each other to prevent the transmittal of the axial forces across surfaces rotating at different speeds to reduce wear and energy losses. Isolation and axial retention of gears 80, 76, and 78 is as follows:

Gear 80 is retained against axial movement relative to shaft 72 in the leftward direction by a thrust plate 178 and in the rightward direction through ring member 151 by a shoulder 72c defined by a step in shaft 72. Shoulder 72c prevents axial loading being imposed on gear 76 when gear 80 is engaged. Gear 76 is retained against axial movement relative to shaft 72 in the leftward direction through ring member 151 by a snap ring 180 and in the rightward direction through ring member 167 which abuts a shoulder 72d defined by a step in shaft 72. Gear 78 is retained against axial movement relative to shaft 72 in the leftward direction through ring member 167 by a snap ring 182 and in the rightward direction by a thrush plate 184.

Friction clutch 82, which is structurally and functionally conventinoal and identical to clutch 48, includes the housing member 98 splined to shaft 72 at 98a, the set of disks 101 which are slidably splined to internal splines 98b defined by the housing member, the set of disks 100 which are slidably splined to external splines 102a defined by an extention of sleeve 102, a reaction member 186 which is non-rotatably secured to housing member 98 by splines 98b, a piston 188 for squeezing the disks together in response to pressurized fluid being introduced into a chamber 190 defined by housing member 98 and piston 188, and a return spring 192 for retracting the piston. Housing member 98 is axially retained by a shoulder 72e defined by a step in shaft 72 and a snap ring 194. Sleeve 102 and gear 104 are rotatably supported on shaft 72 by a pair of roller bearings 196 and are axially retained by snap rings 194 and 204 through thrust bearings 198 and 200.

The gear 68 and clutch 48 of countershaft assembly 36 are rotatably and axially retained on shaft 40 in a similar manner.

Output shaft 20 is rotataly supported by the roller bearing 124 and a ball bearing 206. The outer race of 206a of bearing 206 is supported by housing portion 14c and is axially retained thereto by a shoulder 14k and a snap ring 208. Axial retention of shaft 20 is provided by the inner race 206b of bearing 206 which is sandwiched between a shoulder 20b defined by shaft 20 and a spacer sleeve 210. Sleeve 210 is held in place by an output yoke 212 which is splined to shaft 20 and axially retained by a bolt 214. Output gears 70 and 106 are splined to shaft 20 and are retained in the leftward direction by a flange portion 20c defined by shaft 20 and in the rightward direction by the inner race 206b.

Operation

In reviewing the operation, it will be assumed that the transmission 10 is installed in a land vehicle having an internal combustion engine, that the engine crankshaft is connected to torque converter shroud 24 by studs 128, that the crankshaft rotates the shroud clockwise when viewing the shroud from the front, and that a shift control system wil automatically effect shifting to the desired speed ratios in the proper sequence. Such control systems are well known and are often made responsive to parameters such as engine load and vehicle speed. It will also be assumed that the control system includes a shift control lever which is selectively placed in neutral to disengage the transmission, or in drive to effect forward movement of the vehicle, or in reverse to effect reverse movement of the vehicle. The shift control system referred to herein is by way of example only and does not form part of the invention herein or any preferred form of a control system.

With the shift control lever in neutral and the engine running, bypass shaft 13 and torque converter driven shaft 26 rotate clockwise and rotate input drive gears 50, 86, and 52 clockwise, whereby driven gears 44, 46, 76, 78 rotate counterclockwise and gear 80 rotates clockwise since it is driven through idler gear assembly 108. Further, countershafts 40 and 72 are completely disconnected from the transmission input and output since synchronizers 42 and 74 and fluid actuated clutches 48 and 82 are disengaged while the shift control lever is in neutral.

Assuming now that a vehicle operator places the shift control lever in drive and wishes to accelerate the vehicle in a forward direction to a speed which will cause the control system to sequentially upshift through each of the four forward ratio gears. When the shift lever is placed in drive, the control system connects the torque converter driven shaft to the output shaft through the first speed ratio gear in the following sequence: 1) synchronizer flange 60a is moved slightly to the left by an appropriate actuator (not shown) to effect a frictional connection of the first gear 44 to shaft 40, whereby shaft 40, which is disconnected from the output shaft, is pulled up towards synchronous speed with gear 44; 2) flange 60a will then move further to the left and clutch gear 44 to shaft 40 by the jaw clutch in the synchronizer when the synchronous speed is reached; and 3) clutch 48 is then actuated by pressurized fluid. First gear is now fully engaged.

When engine load decreases and vehicle speed increases to predeterminied amounts, the torque converter driven shaft is connected to the output through the second speed ratio gear in the following sequence: 1) synchronizer flange 96a is moved slightly to the left by an unshown actuator to effect a frictional connection of the second gear 76 to shaft 72, whereby shaft 72, which is disconnected from the output shaft, is pulled up toward synchronous speed with gear 76; 2) flange 96a will then move further to the left and clutch gear 76 to shaft 72 by the jaw clutch in the synchronizer when the synchronous speed is reached; 3) clutches 48 and 82 are then deactuated and actuated, respectively, to drivingly disconnect shaft 40 and drivingly connect shaft 72; and 4) flange 60a is then moved back to its neutral position to disengage the synchronizer. Second gear is now fully engaged and first gear is disengaged. In the foregoing sequence in upshifting to second gear, it should be noted that shaft 72 is synchronized with gear 76 through a drive connection with the transmission input and while drive is through the first gear and shaft 40. Such synchronizing may be characterized as input synchronizing. The other ratio gears and the associated countershafts are synchronized in a like manner.

When engine load decreases and vehicle speed increases to a predetermined amount, bypass shaft 13 is then connected to the output shaft through third speed ratio gear 46 in a four step sequence similar to the above sequence for second gear: 1) flange 60a is moved slightly to the right to frictionally connect gear 46 to shaft 40; 2) when synchronous speed is reached, flange 60a moves further to the right to engage the synchronizer jaw clutch; 3) clutches 82 and 48 are deactuated and actuated, respectively; and 4) flange 96a is moved back to neutral. Third gear is now fully engaged and the torque converter is automatically bypassed.

The sequence for upshifting to fourth gear should be obvious from the foregoing and it should suffice to say that synchronizer 74 is actuated to the right, clutches 48 and 82 are deactuated and actuated, respectively, and synchronizer 42 is disengaged.

Downshifting from fourth gear is merely the reverse of the upshift sequence in that the next lower ratio gear is first synchronized with its respective shaft while drive continues in the higher ratio, the drive is then switched from one countershaft assembly to the other by deactuating and actuating the fluid actuated clutches 48 and 82.

Assuming now that the vehicle operator wishes to move the vehicle in the reverse direction, the shift control lever is placed in the reverse position, whereby the control system will connect the torque converter driven shaft to the output shaft through reverse gear 80 and idler assembly 108. The sequence of events to effect drive in reverse may vary; one sequence which may be automatically effected by the control system is as follows: 1) torque converter driven shaft 26 is pulled down to a low speed by momentarily effecting a driving connection to the output shaft through countershaft assembly 36; this is done by connecting first gear 44 to shaft 40 and momentarily actuating clutch 48 in the manner described for forward drive in first gear; and 2) clutch member 118, of the clutch assembly 84, is then resiliently moved leftward by actuator 156 to effect interengagement of jaw clutch teeth 118a and 116.

The position of first gear 44 on countershaft 40 and reverse gear 80 on countershaft 72 allows the vehicle operator to power shift between first and reverse. Such power shifting is accomplished by moving the shift control lever between drive and reverse and by programming the control system to momentarily delay or leave reverse clutch 84 engaged and then actuating and deactuating clutches 48 and 80 in accordance with the position of the shift control lever. This facilitates quick reverse to forward power shifting which greatly enhances the operator's ability to rock the vehicle as is often necessary in snow and mud conditions.

Looking now at a feature provided by the arrangement of the helical teeth of the gears in the transmission, it is well known in force analysis of gears having meshed helical teeth that forces acting on the contacting teeth of each gear may be resolved into tangential, radial, and axial components. The tangential force component is useful since it serves to rotate the driven gear. The radial and axial force components on the other hand are not normally useful; they merely add to bearing loads and tend to bend the shaft that the gear is mounted on.

Looking now at the schematic illustration of FIGURE 5, therein is shown gears 44, 46, and 68 which are mounted on countershaft 40. These gears are provided with helical teeth which are arrayed with a helical hand such that the bending moments imposed on shaft 40 by axial force components acting on gears 44, 46, and 68 will subtract from bending moments imposed on the shaft by radial force components, thereby reducing the net bending forces on shaft 40 to a level less than would be caused if the gears had the opposite hand. More specifically gears 44, 46, and 68 rotate counterclockwise when viewed from the left end of shaft 40. Gears 44 and 46 are driven gears and gear 68 is a drive gear. The radial forces $fr_1$, $fr_2$, and $fr_3$, acting on these gears all act in the indicated directions and tend to bend or bow the simply mounted shaft 40 upward. To counter the bending forces of $fr_1$, $fr_2$, and $fr_3$, gears 44, 46, and 68 each have left hand helical teeth. Since gears 44 and 46 are driven gears, the axial forces $fa_1$ and $fa_2$ on the helical contact teeth of each will act to the left, thereby imposing a clockwise bending moment on their respective gears which tends to bend or bow shaft 40 downward. Since gear 68 is a drive gear, the axial force $fa_3$ will act to the right, thereby imposing a counterclockwise bending moment on gear 68 which tends to bend or bow shaft 40 downward. Hence, it may be seen that the axial forces subtract from the radial forces to decrease the net bending forces acting on shaft 40. It should be kept in mind that at any given time, only one of gears 44 and 46 are engaged. The magnitude of the axial forces acting on each of the gears 44, 46, and 68 may of course be varied by varying the degree of the helical angle on each gear to balance the forces.

Gears 80, 76, 78, and 104 of countershaft assembly 38 have helical teeth inclined in the same direction as the gear teeth of countershaft assembly 36 and for the same reasons given for shaft 40 of countershaft assembly 36.

The preferred embodiments of the invention have been disclosed for illustrative purposes. Many variations and modifications of the preferred embodiment are believed to be within the spirit of the invention. The following claims are intended to cover the inventive portions of the preferred embodiment and the variation and modification within the spirit of the invention.

**Claims**

1. A power shift transmissiion including input shaft means (12) adapted to be driven by an engine, an output shaft (20) adapted to be continuously connected to a load, friction clutch means (48, 82) and intermediate shaft means (36 or 38), each of the shafts being mounted independently of each other, the intermediate shaft means comprising clutch means (76b, 78a, 96b) for positively clutching the intermediate shaft means (36 or 38) with the continuously driven input shaft means (12), while the intermediate shaft means is drivingly disconnected from the output shaft (20), said friction clutch means (48 or 82) being drivingly interposed between the intermediate shaft means and the output shaft (20) and operative after said positive clutching to power clutch the intermediate shaft means (36 or 38) with the output shaft (20), characterized in that the intermediate shaft means (36) or (38) comprise synchronizing means (92, 168) which are operative to synchronize the intermediate shaft means (36 or 38) with the input shaft means (12) prior to said positive clutching and while the intermediate shaft means is drivingly disconnected from the output shaft (20); in that the input shaft means (10) comprises a torque converter (26) continously driven by a torque converter (16) driven by the engine, a bypass shaft (13) adapted to be continuously driven by the engine; and in that the torque converter- and bypass shafts (26, 13) are alternatively connectable with the intermediate shaft means and output shaft (20) via the synchronizing and positive clutching means (92, 168; 70, 6b, 96b) and the friction clutch means (48, 82).

2. The transmission of Claim 1, characterized by the fact that the intermediate shaft means comprises a countershaft (40 or 72) and an input gear (80 or 86) non-rotatably fixed to the input shaft means; an output gear (70 or 106) non-rotatably fixed to the output shaft (20); a driven gear (44 or 46 or 76 or 78) rotatably supported by the countershaft (40 or 72) and in mesh with the input gear; and a drive gear (68 or 104) rotatably supported by the countershaft (40 or 72) and in mesh with the output gear, and that the friction clutch means (82) are interposed between the countershaft (40 or 72) and the drive gear.

3. The transmission of Claim 1, characterized by the fact that the intermediate shaft means comprises first and second countershafts (40, 72) and is further including: input gears (50, 86) non-rotatably fixed to the input shaft means; output gears (70, 106) non-rotatably fixed to the output shaft (20); a driven gear (44 or 46, 76 or 78) rotatably supported by each countershaft (40, 72) and in mesh with the input gears (50, 86); and a drive gear (68, 104) rotatably supported by each countershaft (40, 72) and in mesh with the output gears (70, 106), and that the friction clutch means (48, 82) are interposed between each countershaft and each drive gear.

4. The transmission of Claim 1, characterized by the fact that input gears (50, 86, 52) are non-rotatably fixed to the torque converter- and bypass shafts (26, 13) and that the intermediate shaft means comprises first and second countershafts (40, 72) each including at least two driven gears (44, 46 and 76, 78) rotatably mounted thereon, one (44, 76) of each two ratio gears being in mesh with input gears (50, 86) fixed to the torque converter shaft (26) and the other (46, 78) of each two ratio gears being in mesh with input gears (52) fixed to the bypass shaft (13), and that said one ratio gears and said other ratio gears are alternately connectable with the respective countershafts (40, 72) by the synchronizing and positive clutching means (92, 168; 76b, 98b) and that the countershafts are alternately connectable with the output shaft (20) by the friction clutch means (48, 82).

5. The transmission of Claim 3, characterized by the fact that first synchronizing and positive clutching means (42) are operative to synchronize and thereafter to positively clutch the first countershaft (40) with the driven gear (44 or 46) supported thereon; that first friction clutch means (48) are operative thereafter to clutch the first countershaft (40) with the drive gear (68) supported thereon to effect a driving connection from the input shaft means (12) to the output shaft (20) through the first countershaft (40), that second synchronizing and positive clutching means (74) are operative to synchronize and thereafter to positively clutch the second countershaft (72) with the driven gear (76 or 78) supported thereon, and that second friction clutching means (82) are operative after the second countershaft (72) clutching to clutch the second countershaft (72) with the drive gear (104) supported thereon, while the first countershaft (40) is declutched from the drive gear (68) supported thereon, thereby effecting a driving connection from the input shaft means (12) to the output shaft (20) through the second countershaft (72) while said driving connection through the first countershaft (40) is disconnected.

6. The transmission of Claim 5, characterized by the fact that the means to synchronize and the means to positively clutch the first countershaft (40) with the driven gear (44 or 46) supported thereon define a first synchronizer clutch (42), that the means to synchronize and the means to positively clutch the second countershaft (72) with the driven gear (76 or 78) supported thereon define a second synchronizer clutch (74) and that each of said synchronizer clutches (42, 44) include: friction clutch means operative when actuated to drivingly interconnect their responsive countershaft and driven gear to provide said synchronizing while the respective countershaft and drive gear are drivingly disconnected; a jaw clutch to provide said positive clutching; and blocker means operative to prevent engagement of said jaw clutch until said synchronism is reached.

7. The transmission of Claim 4, characterized by the fact that a drive gear (68, 104) is rotatably supported by each countershaft (40, 72), that outputs gears (70, 102) are nonrotatably fixed to the output shaft (20) and in mesh with the drive gears (68, 104), that first synchronizing and position clutching means (42) are operative to clutch the first countershaft (40) with either of the ratio gears (44, 46) supported thereby; that second synchronizing and positive clutching means (74) are operative to clutch the second countershaft (72) with either of the ratio gears (76, 78) supported thereby; that first friction clutching means (48) are operative after clutching by the first synchronizing and positive clutching means to clutch the first countershaft (40) with the drive gear (68) supported thereby; and that the second friction clutching means (82) are operative after clutching by the second synchronizing and positive clutching means to clutch the second countershaft (72) with the drive gear (104) supported thereby while the first friction clutching means are declutched.

8. The transmission of Claim 7 characterized by the fact that a reverse gear (80) is rotatably supported by one of the countershafts (40, 72), that an idler gear means (108) is drivingly interposed between the input gear (50) fixed to the torque converter shaft (26) and the reverse gear (80); and that means (84) are provided for clutching the reverse gear (80) with said one countershaft.

9. The transmission of Claim 8, characterized by the fact that one of the driven gears (44, 46) on the first countershaft (40) is a first speed ratio gear (44) in mesh with the input gear (50) fixed to the torque converter shaft (26) and that the reverse gear (80) is rotatably supported by the second countershaft (72), that the first speed ratio gear (44) and the reverse gear (80) may be clutched to their respective countershaft (40 resp. 77) and the transmission may be power shifted between first gear and reverse gear by alternately clutching and declutching the first friction clutching means (48) and the second friction clutching means (82).

10. The transmission of Claim 9, characterized by the fact the other driven gear (46) on the first countershaft (40) is a third speed ratio gear, and that one of the ratio gears (76, 78) on the second countershaft (72) is a second speed ratio gear.

**Revendications**

1. Transmission à changement de vitesse comportant des moyens constituant un arbre d'entrée (12) destiné à être entraîné par un moteur, un arbre de sortie (20) desinté à être accouplé en permanence à une charge, des moyens constituant un embrayage à friction (48, 82) et des moyens constituant un arbre intermédiaire (36 ou 38), chaque arbre étant monté indépendamment de l'autre, les moyens constituant l'arbre intermédiaire comportant des moyens (76b, 78a, 96b) pour embrayer positivement les moyens constituant l'arbre intermédiaire (36 ou 38) avec les moyens constituant l'arbre d'entrée (12) entraîné en permanence, tandis que les moyens constituant l'arbre intermédiaire sont désaccouplés, vis-à-vis d'une relation d'entraînement, de l'arbre de sortie (20), les moyens constituant un embrayage à friction (48 ou 82) étant interposés, de façon à assurer une relation d'entraînement entre les moyens constituant l'arbre intermédiaire et l'arbre de sortie (20) et opérationnels après l'embrayage positif précité, pour embrayer les moyens constituant l'arbrme intermédiaire (36 ou 38) sur l'arbre de sortie (20), caracterisée en ce que les moyens constituant l'arbre intermédiaire (36 ou 38) comportent des moyens de synchronisation (92, 168) qui sont operationnels avant l'embrayage positif précité pour synchroniser les moyens constituant l'arbre intermédiaire (36 ou 38) avec les moyens constituant l'arbre d'entrée (12) et tandis que les moyens constituant l'arbre intermédiaire sont déscouplés de l'arbre de sortie (20), en ce que les moyens constituant l'arbre d'entrée (12) comportent un arbre de convertisseur de couple (26) entraîné en permanence par un convertisseur de couple (16) entraîné par le moteur, un arbre de dérivation (13) destiné à être entraîné en permanence par le moteur, et en ce que les arbres de convertisseur de couple et de dérivation (26, 13) peuvent être accouplés en alternanace avec les moyens constituant un arbre intermédiaire et l'arbre de sortie (20) par l'intermédiaire de moyens de synchronisation et d'embrayage positif (92, 168; 76b, 96b) et des moyens d'embrayage à friction (48, 82).

2. Transmission selon la revendication 1, caractérisée en ce que les moyens constituant un arbre intermédiaire comportent un arbre intermédiaire (40 ou 72) et un pignon d'entrée (80 ou 86) fixé sans possibilité de rotation relative sur les moyens constituant l'arbre d'entrée; un pignon de sortie (70 ou 106) fixé sans possibilité de rotation relative sur l'arbre de sortie (20); un pignon entraîné (44 ou 46 ou 76 ou 78) supporté avec possibilité de rotation par l'arbre intermédiaire (40 ou 72) et en prise avec le pignon d'entrée; et un pignon d'entraînement (68 ou 104) supporté avec possibilité de rotation par l'arbre intermédiaire (40 ou 72) et en prise avec le pignon de sortie, et en ce que les moyens constituant un embrayage à friction (82) sont interposés entre l'arbre intermédiaire (40 ou 72) et le pignon d'entraînement.

3. Transmission selon la revendication 1, caractérisée en ce que les moyens constituant un arbre intermédiaire comportent des premier et second arbres intermédiaires (40, 72), ainsi que des pignons d'entrée (50, 86) fixés sans possibilité de rotation relative sur les moyens constituant l'arbre d'entrée; des pignons de sortie (70, 106) fixés sans possibilité de rotation relative sur l'arbre de sortie (20); un pignon entraîné (44 ou 46, 76 ou 78) supporté avec possibilité de rotation par chaque arbre intermédiaire (40, 72) et en prise avec les pignons d'entrée (50, 86) et un pignon d'entraînement (68, 104) supporté avec possibilité de rotation par chaque arbre intermédiaire (40, 72) et en prise avec les pignons de sortie (70, 106), et en ce que les moyens constituant un embrayage à friction sont interposés entre chaque arbre intermédiaire et chaque pignon d'entraînement.

4. Transmission selon la revendication 1, caractérisée en ce que des pignons d'entrée (50, 86, 52) sont fixés sans possibilité de rotation relative sur les arbres de convertisseur de couple et de dérivation (26, 13) et en ce que les moyens constituant un arbre intermédiaire comportent des premier et second arbres intermédiaires (40, 72) avec au moins chacun deux pignons entraînés (44, 46 et 76, 78) qu'ils supportent avec possibilité de rotation, un premier de chaque ensemble de deux pignons de rapport (44, 76) étant en prise avec des pignons d'entrée (50, 86) fixés sur l'arbre de convertisseur de couple, et le second (46, 78) de chaque ensemble de deux pignons de rapport étant en prise avec des pignons d'entrée (52) fixés sur l'arbre de dérivation (13), et en ce que lesdits premiers et seconds pignons de rapport peuvent être accouplés en alternance avec les arbres intermédiaires respectifs (40, 72) par les moyens de synchronisation et d'embrayage positif (92, 168; 76b, 98b), les arbres intermédiaires pouvant être accouplés en alternance avec l'arbre de sortie par les moyens constituant un embrayage à friction (48, 82).

5. Transmission selon la revendication 3, caractérisée en ce que des premiers moyens de synchronisation et d'embrayage positif (42) sont opérationnels pour synchroniser et ensuite embrayer positivement le premier arbre intermédiaire (40) et le pignon entraîné (44 ou 46) supporté par cet arbre, en ce que des premiers moyens d'embrayage à friction (48) sont ensuite opérationnels pour embrayer le premier arbre intermédiaire (40) avec le pignon d'entraînement (68) qu'il supporte, pour établir un accouplement d'entraînement depuis les moyens constituant l'arbre d'entrée (12) vers l'arbre de sortie (20) par l'intermédiaire du premier arbre intermédiaire (40), en ce que des seconds moyens de synchronisation et d'embrayage positif (74) sont opérationnels pour synchroniser le second arbre intermédiaire (72) avec le pignon entraîne (76 ou 78) qu'il supporte, en ce que des seconds moyens d'embrayage à friction (82) sont opérationnels après synchronisation du second arbre intermédiaire pour embrayer positivement ce second arbre intermédiaire avec le pignon entraîné (76 ou 78) qu'il supporte; et en ce que les seconds moyens d'embrayage à friction (82) sont opérationnels après embrayage du second arbre intermédiaire (72) pour embrayer ce second arbre intermédiaire (72) avec le pignon d'entraînement (104) qu'il supporte, alors que le premier arbre intermédiaire (40) est débrayé du pignon d'entraînement (68) qu'il supporte, ce qui établit un accouplement d'entraînement depuis les moyens constituant l'arbre d'entrée (12) vers l'arbre de sortie (20) par l'intermédiaire du second arbre intermédiaire (72), alors que l'accouplement d'entraînement par le premier arbre intermédiaire (40) est coupé.

6. Transmission selon la revendication 5, caractérisée en ce que les moyens de synchronisation et les moyens d'embrayage positif du premier arbre intermédiaire (40) avec le pignon entraîné (44 ou 46) qu'il supporte définissent un premier embrayage synchroniseur (42), en ce que les moyens de synchronisation et les moyens d'embrayage positif du second arbre intermédiaire (72) avec le pignon entraîne (76 ou 78) qu'il supporte définissent un second embrayage synchroniseur (74), et en ce que chaque embrayage synchroniseur comporte des moyens constituant embrayage à friction opérationnels lorsqu'ils sont commandés pour accoupler en fonctionnement leurs arbre intermédiaire et pignon entraîné respectifs, afin d'établir la synchronisation précitée, alors que leurs arbre intermédiaire et pignon d'entraînement respectifs sont désaccouplés en fonctionnement, un embrayage à mâchoires pour établir l'embrayage positif, et des moyens de blocage opérationnels pour interdire l'engagement de l'embrayage à mâchoires jusqu'à ce que la synchronisation soit établie.

7. Transmission selon la revendication 4, caractérisée en ce qu'on pignon d'entraînement (68, 104) est supporté avec possiblité de rotation par chaque arbre intermédiaire (40, 72), en ce que les pignons de sortie (70, 106) sont fixés sans possibilité de rotation relative sur l'arbre de sortie (20) et en prise avec les pignons d'entraînement (68, 104), en ce que les premiers moyens de synchronisation et d'embrayage positif (42) sont opérationnels pour embrayer le premier arbre intermédiaire (40) avec l'un ou l'autre des pignons de rapport (44, 46) qu'il supporte; en ce que les seconds moyens de synchronisation et d'embrayage positif (74) sont opérationnels pour embrayer le second arbre intermédiaire (72) avec l'un ou l'autre des pignons de rapport (76, 78) qu'il supporte; en ce que les premiers moyens d'embrayage à friction (48) sont opérationnels après embrayage par les premiers moyens de synchronisation et d'embrayage positif pour embrayer le premier arbre intermédiaire (40) avec le pignon d'entraînement (68) qu'il supporte; et en ce que les seconds moyens d'embrayage à friction (82) sont opérationnels après embrayage par les seconds moyens de synchronisation et d'embrayage positif pour embrayer le second arbre intermédiaire (72) avec le pignon d'entraînement (104) qu'il supporte, alors que les premiers moyens d'embrayage à friction sont débrayés.

8. Transmission selon la revendication 7, caractérisée en ce qu'un pignon de marche arrière (80) est supporté avec possibilité de rotation par l'un des arbres intermédiaires (40, 72), en ce que des moyens constituant un pignon fou (108) sont interposés en relation d'entraînement entre le pignon d'entrée (50) fixé sur l'arbre (26) du convertisseur de couple et le pignon de marche arrière (80); et en ce que des moyens (84) sont prévus pour embrayer le pignon de marche arrière (80) avec l'arbre intermédiaire considéré.

9. Transmission selon la revendication 8, caractérisée en ce que l'un des pignons entraînés (44, 46) sur le premier arbre intermédiaire (40) est un pignon de premier rapport de vitesse (44) en prise avec le pignon d'entrée (50) fixé sur l'arbre (26) du convertisseur de couple, et en ce que le pignon de marche arrière (80) est supporté avec possibilité de rotation par le second arbre intermédiaire (72), en ce que le pignon de premier rapport de vitesse (44) et le pignon de marche arrière (80) peuvent être embrayés sur leurs arbres intermédiaires respectifs (respectivement 40, 77), la transmission pouvant être commutée entre le premier rapport de vitesse et la marche arrière par embrayage et débrayage en alternance des premiers moyens d'embrayage à friction (48) et des seconds moyens d'embrayage à friction (82).

10. Transmission selon la revendication 9, caractérisée en ce que l'autre pignon entraîné (46) sur le premier arbre intermédiaire (40) est un pignon de troisième rapport de vitesse, et en ce que l'un des pignons de rapport (76, 78) sur le second arbre intermédiaire (72) est le pignon de second rapport de vitesse.

**Patentansprüche**

1. Unter Last schaltbares Getriebe mit von einem Motor antreibbarer Eingangswellenanordnung (12), einer dauernd mit einer Last verbindbaren Ausgangswelle (20), Reibungskupplungseinrichtungen (48, 82) und Zwischenwellenmitteln (36 oder 38), wobei die einzelnen Wellen unabhängig voneinander gelagert sind und die Zwischenwellenmittel Einrichtungen (76b, 76a, 96b) aufweisen, durch die die Zwischenwellenmittel (36 oder 38) mit der dauernd angetriebenen Eingangswellenanordnung (12) formschlüssig kuppelbar sind, während die Antriebsverbindung zwischen den Zwischenwellenmitteln und der Ausgangswelle (20) unterbrochen ist und die Reibungskupplungseinrichtungen (48 oder 82) jeweils auf dem Kraftübertragungsweg zwischen den Zwischenwellenmitteln und der Ausgangswelle (20) liegen und nach der formschlüssigen Kupplung wirksam werden, um die Zwischenwellenmittel (36 oder 38) mit der Ausgangswelle (20) zu kuppeln, dadurch gekennzeichnet, daß die Zwischenwellenmittel (36 od. 38) Synchronisationseinrichtungen (92, 168) aufweisen, durch die die jeweiligen Zwischenwellenmittel (36 od. 38) jeweils vor der formschlüssigen Kupplung und bei unterbrochener Antriebsverbindung zwischen den Zwischenwellenmitteln (36 od. 38) und der Ausgangswelle (20) mit der Eingangswellenanordnung (12) synchronisierbar sind, daß die Eingangswellenanordnung (12 eine von einem Drehmomentwandler (16) dauernd angetriebene Drehmomentwandlerwelle (26) sowie eine von dem Motor dauernd antriebbare Neben-(Bypass)-Welle (13) enthält und daß die Drehmomentwandlerwelle (26) und die Nebenwelle (13) mit den Zwischenwellenmitteln und der Ausgangswelle (20) abwechselnd über die Synchronisationseinrichtungen (92, 168) und die formschlüssige Kupplungseinrichtung (76b, 96b) sowie die Reibungskupplungseinrichtungen (48, 82) kuppelbar sind.

2. Getriebe nach Anspruch 1, dadurch gekennzeichnet daß die Zwischenwellenmittel eine Vorgelegewelle (40 oder 72) und ein drehfest mit der Eingangswellenanordnung verbundenes Eingangszahnrad (50 oder 86) aufweisen; daß ein Ausgangszahnrad (70 oder 106) drehfest auf der Ausgangswelle (20) angeordnet ist; daß ein angetriebenes Zahnrad (44 oder 46 oder 76 oder 78) drehbar auf der Vorgelegewelle (40 oder 72) gelagert und mit dem Eingangszahnrad in Eingriff steht; und daß ein Antriebszahnrad (68 oder 104) drehbar auf der Vorgelegewelle (40 oder 72) gelagert ist und in Eingriff mit dem Ausgangszahnrad steht und die Reibungskupplungseinrichtung (82) jeweils zwischen der Vorgelegewelle (40 oder 72) und dem Antriebszahnrad angeordnet ist.

3. Getriebe nach Anspruch 1, dadurch gekennzeichnet, daß die Zwischenwellenmittel erste und zweite Vorgelegewellen (40, 72) enthalten und außerdem aufweisen: Jeweils drehfest auf der Eingangswellenanordnung befestigte Eingangszahnräder (50, 86); drehfest auf der Ausgangswelle (20) angeordnete Ausgangszahnräder (70, 106); auf jeder der Vorgelegewellen (40, 72) ein drehbar gelagertes angetriebenes Zahnrad (44 der 46, 76 oder 78), das mit den Eingangszahnrädern (50, 86) in Eingriff steht; und auf jeder Vorgelegewelle (40, 72) ein drehbar gelagertes Antriebszahnrad (68, 104), das mit den Ausgangszahnrädern (70, 106) in Eingriff steht, und daß die Reibungskupplungseinrichtung (48, 82) jeweils zwischen jeder Vorgelegewelle und jedem Antriebszahnrad angeordnet sind.

4. Getriebe nach Anspruch 1, dadurch gekennzeichnet, daß die Eingangszahnräder (50, 86, 52) drehfest auf der Drehmomentwandlerwelle und der Nebenwelle (26, 13) angeordnet sind und daß die Zwischenwellenmittel erste und zweite Vorgelegewellen (40, 72) enthalten, von denen jede zumindest zwei drehbar auf ihr gelagerte angetriebene Zahnräder (44, 46 und 76, 78) aufweist, wobei jeweils eines (44, 76) von jeweils zwei dieser Stufen-Zahnräder mit drehfest auf der Drehmomentwandlerwelle (26) sitzenden Eingangszahnrädern (50, 86) und das andere (46, 78) dieser beiden Stufen-Zahnräder mit drehfest auf der Nebenwelle (13) angeordneten Eingangszahnrädern (52) in Eingriff steht und daß jeweils die einen Stufen-Zahnräder und die andern Stufen-Zahnräder abwechselnd mit der entsprechenden Vorgelegewelle (40, 72) über die entsprechenden Vorgelegewelle (40, 72) über die Synchronisationseinrichtungen und die formschlüssigen Kupplungseinrichtungen (92, 168; 76b; 96b) kuppelbar sind und die Vorgelegewellen abwechselnd mittels der Reibungskupplungseinrichtungen (48, 82) mit der Ausgangswelle (20) kuppelbar sind.

5. Getriebe nach Anspruch 3, dadurch gekennzeichnet, daß durch die erste Synchronisationseinrichtung und formschlüssige Kupplungseinrichtung (42) die erste Vorgelegewelle (40) mit dem darauf gelagerten angetriebenen Zahnrad (44 oder 46) synchronisierbar und anschließend formschlüssig kuppelbar ist; daß daran anschließend durch eine erste Reibungskupplungseinrichtung (48) die erste Vorgelegewelle (40) mit dem darauf angeordneten Antriebszahnrad (68), unter Herstellung einer Antriebsverbindung von der Eingangswellenanordnung (12) über die erste Vorgelegewelle (40) zu der Ausgangswelle (20) kuppelbar ist, daß durch eine zweite Synchronisationseinrichtung und formschlüssige Kupplungseinrichung (74) die zweite Vorgelegewelle (72) mit dem darauf angeordneten angetriebenen Zahnrad (76 oder 78) synchronisierbar und anschliessend formschlüsssig kuppelbar ist und daß durch eine zweite Reibungskupplungseinrichtung (82) nach der Kupplung der zweiten Vorgelegewelle (72) die zweite Vorgelegewelle (72) mit dem darauf angeordneten Antriebszahnrad (104) kuppelbar ist, während die erste Vorgelegewelle (40) von dem darauf angeordneten Antriebszahnrad (68) begkuppelt ist, derart daß eine Antriebsverbindung von der Eingangswellenanordnung (12) über die zweite Vorgelegewelle (72) zu der Ausgangswelle (20) hergestellt wird, während die Antriebsverbindung über die erste Vorgelegewelle (40) unterbrochen ist.

6. Getriebe nach Anspruch 5, dadurch gekennzeichnet, daß die Einrichtungen zur Synchronisation und die Einrichtungen zur formschlüssigen Kupplung der ersten Vorgelegewelle (40) mit dem darauf gelagerten angetriebenen Zahnrad (44 oder 46) durch eine erste Synchronisationskupplung (42) gebildet sind, daß die Einrichtungen zur Synchronisation und die Einrichtungen zur Synchronisation und die Einrichtungen zur formschlüssigen Kupplung der zweiten Vorgelegewelle (72) mit dem darauf gelagerten angetriebenen Zahnrad (76 oder 78) durch eine zweite Synchronisationskupplung (74) gebildet sind und daß jede dieser Synchronisationskupplungen (42, 44) aufweist: Reibungskupplungsmittel, durch die, bei Betätigung, eine Antriebsverbindung zwischen der jeweils zugeordneten Vorgelegewelle und dem jeweiligen angetriebenen Zahnrad, unter Erzeugung der Synchronisierung, herstellbar ist, während die Antriebsverbindung zwischen der jeweiligen Vorgelegewelle und dem Antriebszahnrad unterbrochen ist; eine Klauenkupplung, um die formschlüssige Kupplung herzustellen; und eine Sperreinrichtung, um das Einrücken der Klauenkupplung vor dem Erreichen des Synchronismus zu verhindern.

7. Getriebe nach Anspruch 4, dadurch gekennzeichnet, daß auf jeder Vorgelegewelle (40, 72) ein Antriebszahnrad (68, 104) drehbar gelagert ist, daß auf der Ausgangswelle (20) Ausgangszahnräder (70, 102) drehfest angeordnet sind, die mit den Antriebszahnrädern (68, 104) in Eingriff stehen, daß durch erste Synchronisationseinrichtungen und formschlüssige Kupplungseinrichtung (42) die erste Vorgelegewelle (40) mit jedem der darauf angeordneten Stufen-Zahnräder (44, 46) kuppelbar ist; daß durch zweite Synchronisationseinrichtungen und formschlüssige Kupplungseinrichtungen (74) die zweite Vorgelegewelle (72) mit jedem der darauf angeordneten Stufen-Zahnräder (76, 78) kuppelbar ist; daß durch einer erste Reibungskupplungseinrichtung (48), nach dem Einkuppeln der ersten Synchronisationseinrichtungen und formschlüssigen Kupplungseinrichtungen, die erste Vorgelegewelle (40) mit dem darauf angeordneten Antriebszahnrad (68) kuppelbar ist; und daß durch die zweite Reibungskupplungseinrichtung (82), nach dem Einkuppeln der zweiten Synchronisationseinrichtungen und formschlüssigen Kupplungseinrichtungen, die zweite Vorgelegewelle (72) mit dem darauf angeordneten Antriebszahnrad (104) kuppelbar ist, während die erste Reibungskupplungseinrichtung ausgerückt ist.

8. Getriebe nach Anspruch 7, dadurch gekennzeichnet, daß auf einer der Vorgelegewellen (40, 72) ein Rückwärtsgang-Zahnrad (80) drehbar gelagert ist, daß zwischen dem drehfest auf der Drehmomentwandlerwelle (26) angeordneten Eingszahnrad (50) und dem Rückwärtsgang-Zahnrad (80) ein freilaufendes Zahnrad (108) liegt und daß Einrichtungen (84) vorgesehen sind, um das Rückwärtsgang-Zahnrad (80) mit der Vorgelegewelle zu kuppeln.

9. Getriebe nach Anspruch 8, dadurch gekennzeichnet, daß eines der angetriebenen Zahnräder (44, 46) auf der ersten Vorgelegewelle (40) ein Erster-Gang-Stufen-Zahnrad (44) ist, das in Eingriff mit dem auf der Drehmomentwandlerwelle (26) drehfest angeordneten Eingangszahnrad (50) steht und das Rückwärtsgang-Zahnrad (80) drehbar auf der zweiten Vorgelegewelle (72) gelagert ist, daß das Erster-Gang-Stufen-Zahnrad (44) und das Rückwärtsgang-Zahnrad (80) mit ihrer jeweiligen Vorgelegewelle (40 bzw. 77) kuppelbar sind und das Getriebe unter Last zwischen dem ersten Gang und dem Rückwärtsgang abwechselnd dadurch umschaltbar ist, daß die erste Reibungskupplungseinrichtung (48) und die zweite Reibungskupplungseinrichtung (82) abwechselnd ein-und ausgerückt werden.

10. Getriebe nach Anspruch 9, dadurch gekennzeichnet, daß das andere angetriebene Zahnrad (46) auf der ersten Vorgelegewelle (40) ein Dritter-Gang-Stufen-Zahnrad ist und daß eines der Stufen-Zahnräder (76, 78) auf der zweiten Vorgelegewelle (72) ein Zweiter-Gang-Stufen-Zahnrad ist.

0 004 045

Fig.1.

Fig.2.

1

0 004 045

FIG. 2

FIG.4.

FIG.5.